# EUROPÄISCHE PATENTSCHRIFT

(11) **EP 3 378 540 B1**
(45) Veröffentlichungstag und Bekanntmachung des Hinweises auf die Patenterteilung: **14.10.2020**
(21) Anmeldenummer: 17162357.2
(22) Anmeldetag: 22.03.2017
(51) Int. Cl.: A63C 17/04, A63C 17/08, A63C 17/12, B60K 31/00, A63C 17/24, A63C 17/26, A63C 17/01

(54) **FAHRZEUG MIT EINER AUF EINEM UNTERGRUND IN BELIEBIGE RICHTUNGEN ABROLLENDEN KUGEL**
VEHICLE WITH A BALL WHICH CAN ROLL IN ANY DIRECTION ON A BASE
VÉHICULE COMPRENANT UNE SPHÈRE ROULANT AU SOL DANS DES DIRECTIONS QUELCONQUES

(43) Veröffentlichungstag der Anmeldung: 26.09.2018
(73) Patentinhaber: Winkler, Olaf, 49751 Sögel (DE)
(72) Erfinder: Winkler, Olaf, 49751 Sögel (DE)
(74) Vertreter: Graefe, Jörg

(56) Entgegenhaltungen:
- JP-A- H04 201 793
- JP-A- 2004 129 435
- KR-A- 20120 139 900
- KR-B1- 101 626 862
- NL-C2- 1 033 676
- US-B1- 6 367 817
- MASAAKI KUMAGAI: "Development of a ball drive unit using partially sliding rollers - An alternative mechanism for semi-omnidirectional motion -", INTELLIGENT ROBOTS AND SYSTEMS (IROS), 2010 IEEE/RSJ INTERNATIONAL CONFERENCE ON, IEEE, PISCATAWAY, NJ, USA, 18. Oktober 2010 (2010-10-18), Seiten 3352-3357, XP031920552, DOI: 10.1109/IROS.2010.5651007 ISBN: 978-1-4244-6674-0

## Beschreibung

Aus dem Stand der Technik ist ein sogenannter Ball-Bot bekannt, ein Roboter, der eine Kugel aufweist, die sich auf dem Boden abrollt und von Antrieben des Roboters angetrieben wird. Ein solcher Roboter ist zum Beispiel aus dem Dokument KR 101 626 862 B1 bekannt.

Die vorliegende Erfindung betrifft dagegen ein Fahrzeug
- mit einer auf einem Untergrund in beliebige Richtungen abrollenden Kugel,
- mit wenigstens drei Motoren, deren Abtriebsachsen in unterschiedliche Richtungen ausgerichtet sind,
- mit wenigstens einer Basis, auf welcher sich ein Fahrzeugführer vorzugsweise stehend platzieren kann und an der die Motoren befestigt sind, und
- mit einer Steuereinheit, mit welcher die Motoren ansteuerbar sind.

Aus dem Dokument DE 10 2013 113 643 A1 ist ein solches Fahrzeug bekannt.

Diese Art von Fahrzeugen ist bisher nicht sehr verbreitet und im Wesentlichen aus der Literatur oder vereinzelten Präsentationen bekannt. Im Unterschied zu den deutlich bekannteren "Segways", die zwei angetriebene Räder haben, ist bei einem eingangs genannten Fahrzeug anstelle der angetriebenen Räder eine einzige Kugel vorgesehen, die von mindestens drei Motoren angetrieben wird. Durch die Ausrichtung der Drehachsen der Motoren kann grundsätzlich sichergestellt werden, dass die Kugel um jede Achse durch ihren Mittelpunkt angetrieben werden kann. Das Fahrzeug kann somit ohne Änderung der Vorausrichtung des Fahrzeugs, d.h. Drehung der Basis um die Hochachse in jede beliebige Richtung bewegt werden. Eine Drehung des Fahrzeugs um die Hochachse ist ebenfalls grundsätzlich möglich.

Das aus dem Dokument DE 10 2013 113 643 A1 bekannte Fahrzeug wird, so es aus einer Präsentation des Fahrzeugs bekannt ist, durch Gewichtsverlagerung gesteuert. Je mehr der Fahrzeugführer sein Gewicht in eine Richtung verlagert, umso schneller beschleunigt das Fahrzeug in diese Richtung. Nimmt der Fahrzeugführer bei gleichförmiger Fahrt in eine bestimmte Richtung eine gleichgewichtsneutrale Körperhaltung ein, fährt das Fahrzeug mit einer gleichbleibenden Geschwindigkeit in diese Richtung. Nimmt er eine Körpergewichtsverlagerung in die entgegengesetzte Richtung ein, verlangsamt er die Fahrt in die Richtung. Ändert er die Richtung der Gewichtsverlagerung, ändert er auch die Richtung und/oder die Geschwindigkeit, in die das Fahrzeug fährt.

Wie bereits erläutert wurde, wird ein Fahrzeug gemäß dem Dokument DE 10 2013 113 643 A1 durch Gewichtsverlagerung gesteuert. Damit kann zwar die Fahrtrichtung geändert werden, eine Änderung der Vorausrichtung, d.h. der Ausrichtung des Fahrzeugs im Raum kann damit aber nicht geändert werden.

Die Steuerung des Fahrzeugs allein durch die Gewichtsverlagerung erfordert Erfahrung und Feingefühl und ist insbesondere für Anfänger schwierig. Ein Anliegen des Erfinders war es deshalb, das Steuern des erfindungsgemäßen Fahrzeugs gegenüber einem bekannten Fahrzeug zu vereinfachen.

In dem Dokument "Development of a Ball Drive Unit using Partially Sliding Rollers", Masaaki Kumagai, the 2010 IEEE/RSJ International Conference on Intelligent Robots and Systems, October 18-22, 2010, Taipei, Taiwan, Seite 3352 bis 3357, wird ein Fahrzeug beschrieben, dessen Vorausrichtung einstellbar ist. Es ist in dem Dokument aber nicht beschrieben, wie die Einstellung vorgenommen wird.

Der Erfinder schlägt dazu vor, dass ein erfindungsgemäßes Fahrzeug ein Steuermittel aufweist, mit welchem die Vorausrichtung des Fahrzeugs eingestellt werden kann und welches zum Austausch von Informationen mit der Steuereinheit verbunden ist.

Das Steuermittel kann gemäß der Erfindung auf verschiedene Arten betätigt werden (Betätigungsarten). Die Steuereinheit kann so eingerichtet sein, dass eine Information des Steuermittels, die einer vom Fahrzeugführer gewählten ersten Betätigungsart entspricht und eine Einstellung der Vorausrichtung vorgibt, zu einer Drehung der Basis mittels wenigstens eines Teils der Motoren führt, bis die Vorausrichtung des Fahrzeugs der Fahrtrichtung des Fahrzeugs entspricht, auch wenn die Betätigung gemäß der ersten Betätigungsart nicht andauert.

Es ist aber auch möglich, dass bei dem gleichen oder einem anderen erfindungsgemäßen Fahrzeug die Steuereinheit so eingerichtet ist, dass eine Information des Steuermittels, die einer vom Fahrzeugführer gewählten zweiten Betätigungsart entspricht und eine Einstellung der Vorausrichtung vorgibt, zu einer Drehung der Basis mittels wenigstens eines Teils der Motoren führt, solange die Betätigung gemäß der zweiten Betätigungsart andauert.

Das aus dem Dokument DE 10 2013 113 643 A1 bekannte Fahrzeug weist auf einer Plattform als Basis befestigte Schlaufen auf, die zum Fixieren von Füßen des Fahrzeugführers dienen. Durch die Schlaufen werden die Füße so ähnlich wie auf einem Surfbrett gehalten. Die Füße des Fahrzeugführers sind somit mehr oder weniger fest mit der Plattform des Fahrzeugs verbunden. Trotz der Befestigung der Füße auf der Plattform muss der Fahrzeugführer durch Ausbalancieren verhindern, dass er während der Fahrt oder einer Bewegung des Fahrzeugs von der Plattform fällt. Das ist insbesondere für einen Neuling, aber auch für Personen mit langsamer Reaktion oder beeinträchtigtem Gleichgewichtssinn ungewohnt und schwierig.

Der Erfinder schlägt vor, dass das erfindungsgemäße Fahrzeug ein Haltemittel aufweist, welches von der Basis aufragt und an welcher sich ein Fahrzeugführer festhalten kann. Das Steuermittel ist an dem Haltemittel des erfindungsgemäßen Fahrzeugs angebracht. Das Haltemittel ermöglicht es einem Fahrzeugführer, auch mit den Händen Halt zu finden, so dass er nicht mehr den Oberkörper ausbalancieren muss, um nicht von der Plattform des Fahrzeugs zu fallen, selbst wenn an der Plattform keine Schlaufen oder dergleichen vorgesehen sind, worin die Füße Halt finden können.

Im Unterschied zu einem Segway, welches Griffe aufweist, an denen der Fahrzeugführer angreifen kann, dient das Haltemittel eines erfindungsgemäßen Fahrzeugs zum Festhalten, während die Griffe des Segways und insbesondere eine Säule des Segways, an der die Griffe befestigt sind, zur Steuerung des Segways vorgesehen sind. Die Säule und damit die daran befestigten Griffe sind also beweglich und taugen nicht dazu, sich festzuhalten.

Es ist möglich, dass der Fahrzeugführer mit dem Steuermittel neben der Vorausrichtung auch die Fahrtrichtung und/oder die Geschwindigkeit des Fahrzeugs wählen kann.

Die für den Austausch von Informationen zwischen dem Steuermittel und der Steuereinheit vorgesehene Verbindung zwischen dem Steuermittel und der Steuereinheit kann über Kabel oder Funk hergestellt sein.

Das Steuermittel eines erfindungsgemäßen Fahrzeugs kann ein Bedienelement, zum Beispiel einen Steuerknüppel, einen Joystick, eine Schaltwippe, ein Einstellrad oder einen Drehschalter aufweisen, mit dem die Einstellung der Fahrtrichtung, der Vorausrichtung und/oder der Geschwindigkeit möglich ist.

Ein Fahrzeug gemäß dem Dokument DE 10 2013 113 643 A1 wird durch Gewichtsverlagerung gesteuert. Für die Einstellung der Fahrtrichtung kann ein erfindungsgemäßes Fahrzeug ein Sensorsystem aufweisen, welches Gewichtsverlagerungen des Fahrzeugführers erkennen kann. Durch die Gewichtsverlagerungen kann der Fahrzeugführer die Fahrtrichtung eines erfindungsgemäßen Fahrzeugs wählen. Das Sensorsystem kann mit der Steuereinheit verbunden sein, zum Beispiel, um der Steuereinheit die Wahl der Fahrtrichtung mitzuteilen.

Gemäß der Erfindung kann daher die Steuereinheit eines erfindungsgemäßen Fahrzeugs so eingerichtet sein, dass eine Drehung der Basis zur Änderung der Vorausrichtung dann erfolgt, wenn die vom Fahrzeugführer gewählte Einstellung der Fahrtrichtung für eine bestimmte Zeit andauert.

Während ein bekanntes Fahrzeug der eingangs genannten Art nach dem Wählen der Fahrtrichtung ohne Änderung der Vorausrichtung des Fahrzeugs in die gewählte Fahrtrichtung fährt und dadurch vorwärts, seitwärts, rückwärts oder in jede beliebige Zwischenrichtung fährt, kann bei einem erfindungsgemäßen Fahrzeug das Fahrzeug um seine Hochachse drehen, bis die Vorausrichtung der Fahrtrichtung entspricht. Der Fahrzeugführer schaut dann ohne ein Drehen seines Kopfes in die Fahrtrichtung, wenn seine Blickrichtung der Vorausrichtung des Fahrzeugs entspricht.

Ebenso ist es möglich, dass die Steuereinheit so eingerichtet ist, dass die Drehung der Basis nur dann erfolgt, wenn die Fahrtrichtung und die Vorausrichtung einen Winkel einschließen, der in einem bestimmten Winkelintervall liegt. Das kann der Fall sein, wenn die Fahrtrichtung weniger als ein bestimmter Winkel von der Vorausrichtung abweicht. So kann die Steuereinheit so eingerichtet sein, dass das Fahrzeug nur dann gedreht wird, damit die Vorausrichtung der Fahrtrichtung entspricht, wenn der Winkel zwischen der Vorausrichtung und der Fahrtrichtung beispielsweise weniger als 90° beträgt. Eine Rückwärtsfahrt führt dann beispielsweise nicht zu einer Drehung des Fahrzeugs.

Erfindungsgemäß kann die Steuereinheit so eingerichtet sein, dass die Drehung der Basis erst dann erfolgt, wenn die vom Fahrzeugführer gewählte Einstellung der Fahrtrichtung für eine bestimmte Zeit, zum Beispiel fünf bis zehn Sekunden andauert.

Die Steuereinheit kann so eingerichtet sein, dass die Funktion des Eindrehens des Fahrzeugs bzw. der Vorausrichtung auf die Fahrtrichtung zu- und abschaltbar ist.

Das Steuermittel kann auch dazu vorgesehen sein, um das Fahrzeug einzuschalten oder auszuschalten.

Die Erfindung wird anhand der nachfolgenden Zeichnung weiter beschrieben. Es zeigt:

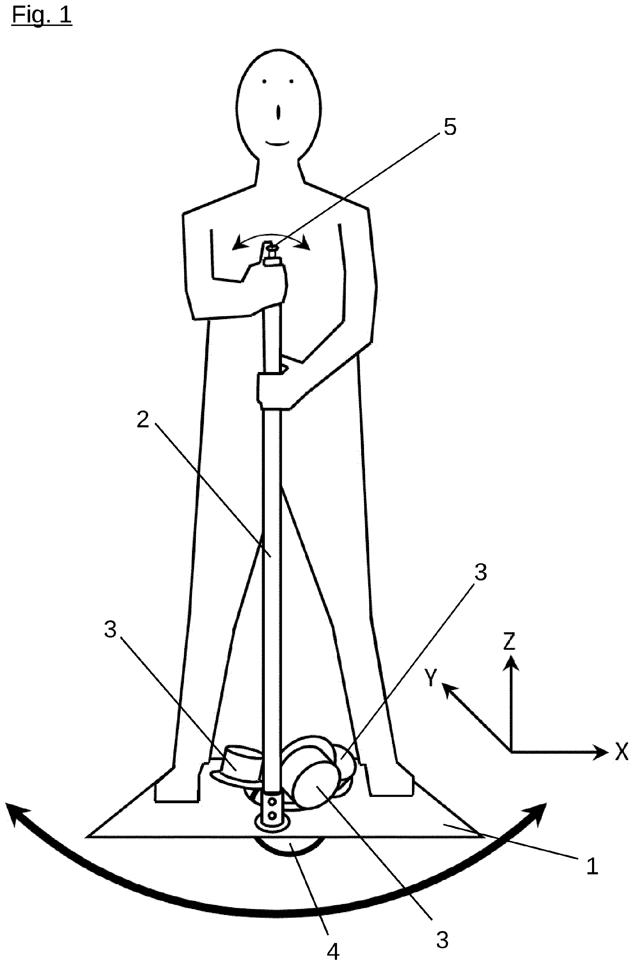

- Fig. 1: eine schematische Darstellung eines erfindungsgemäßen Fahrzeugs mit einem Fahrzeugführer.

Das in der Fig. 1 schematisch dargestellte erfindungsgemäße Fahrzeug weist eine Plattform 1 als Basis auf, auf der der Fahrzeugführer steht. An der Plattform ist ein nach oben ragender Mast 2 befestigt, der als Haltemittel dient, an dem sich der Fahrzeugführer festhalten kann. Als Haltemittel könnte anstelle des Mastes auch ein Bügel in der Form eines umgekehrten U oder etwas anderes dienen. An dem Mast könnten Griffe oder dergleichen vorgesehen sein.

An der Plattform 1 sind drei Motoren 3 befestigt, deren Achsen unterschiedlich ausgerichtet sind. Die Ausrichtung der Achsen der Motoren 3 ist so gewählt, dass eine Kugel 4, die im Wesentlichen unter der Plattform 1 angeordnet ist, mittels der Motoren 3 in jede Richtung um ihren Mittelpunkt gedreht werden kann. Die Motoren 3 haben Abtriebsräder, vorzugsweise handelt es sich dabei um Allseitenräder (auch als Omniwheels bezeichnet), die den Rädern eine freie Bewegung in Richtung der Abtriebsachse des Motors 3 erlauben, von dem das Allseitenrad angetrieben wird.

Die Kugel 4 wird von den Allseitenrädern gehalten, lediglich beim Anheben der Plattform 1 bleibt die Kugel 4 auf dem Untergrund liegen.

Nicht dargestellt ist eine Steuereinheit, die die Motoren 3 ansteuert.

Am oberen Ende des Mastes 2 ist ein Steuerknüppel 5 vorgesehen, der in zwei oder mehr Richtungen gekippt und auch gedrückt werden kann. Durch die Richtung, in die der Steuerknüppel gekippt wird, kann der Fahrzeugführer die Vorausrichtung des Fahrzeugs wählen. Durch den Winkel, um den der Steuerknüppel 5 gekippt wird, kann die Geschwindigkeit gewählt werden, mit welcher die Vorausrichtung geändert wird.

Die Steuerung der Fahrtrichtung erfolgt dagegen über ein nicht dargestelltes Sensorsystem, welches Gewichtsverlagerungen des Fahrzeugführers detektiert und an die Steuereinheit des Fahrzeugs weitergibt. Die Steuereinheit erkennt anhand der Gewichtsverlagerung den Wunsch des Fahrzeugführers betreffend der Fahrtrichtung und steuert die Motoren so an, dass das Fahrzeug in die vom Fahrzeugführer gewünschte Fahrtrichtung bewegt wird. Eine Drehung um die Hochachse des Fahrzeugs findet aufgrund der Gewichtsverlagerung nicht statt.

Die Steuereinheit des Fahrzeugs ist so programmiert, dass die Wahl der Vorausrichtung mittels des Steuerknüppels dazu führen kann, dass das Fahrzeug in die Fahrtrichtung eingedreht wird, so dass die Vorausrichtung der Fahrtrichtung entspricht.

Die Wahl der Vorausrichtung mittels des Steuerknüppels 5 kann dabei auf zwei verschiedene Betätigungsarten erfolgen.

Bei der ersten Betätigungsart wird zum Beispiel der Steuerknüppel kurz in die Richtung angetippt, in die das Fahrzeug um seine Hochachse so lange gedreht werden soll, bis die Vorausrichtung und die Fahrtrichtung einander entsprechen. Dieses Eindrehen kann man, je nach Ausführung eines erfindungsgemäßen Fahrzeugs, zum Beispiel durch ein kurzes Antippen in die Gegenrichtung abbrechen. Ein weiteres Antippen aktiviert das Eindrehen wieder in die gewünschte Richtung, die durch das Antippen vorgegeben wird. Weitere Betätigungen in die gleiche Richtung können zu einer Erhöhung der Eindrehgeschwindigkeit führen. Betätigungen in die entgegengesetzte Richtung können zunächst zu einer Verringerung der Eindrehgeschwindigkeit führen.

Anstelle eines Antippens zum Starten oder Beenden des Eindrehens der Vorausrichtung in die Fahrtrichtung kann auch eine volle Auslenkung des Steuerknüppels treten.

Sollte bei der Betätigung des Steuerknüppels eine Drehrichtung gewählt werden, die zunächst zu einem Vergrößern des Winkels zwischen der Fahrtrichtung und der Vorausrichtung führt, ist das möglich. Das Eindrehen könnte in einem solchen Fall je nach Programmierung beendet werden, sobald die Vorausrichtung der Fahrtrichtung entspricht oder die Vorausrichtung entgegengesetzt zur Fahrtrichtung ist.

Bei der zweiten Betätigungsart, die am gleichen erfindungsgemäßen Fahrzeug realisiert sein kann wie die erste Betätigungsart, wird das Fahrzeug nur so lange eingedreht, wie der Steuerknüppel betätigt wird. Wird der Steuerknüppel 5 während des Eindrehens der Vorausrichtung in die Fahrtrichtung losgelassen bzw. nicht mehr ausgelenkt, stoppt die Eindrehbewegung unmittelbar, auch wenn die Vorausrichtung und die Fahrtrichtung einander nicht entsprechen.

Sollte bei der Betätigung des Steuerknüppels eine Drehrichtung gewählt werden, die zunächst zu einem Vergrößern des Winkels zwischen der Fahrtrichtung und der Vorausrichtung führt, ist auch das möglich.

## Patentansprüche

1. Fahrzeug
- mit einer auf einem Untergrund in beliebige Richtungen abrollenden Kugel (4),
- mit wenigstens drei Motoren (3), deren Abtriebsachsen in unterschiedliche Richtungen ausgerichtet sind,
- mit wenigstens einer Basis (1), auf welcher sich ein Fahrzeugführer platzieren kann und an der die Motoren (3) befestigt sind, wobei an der Basis (1) eine Vorausrichtung des Fahrzeugs festgelegt ist,
- mit einer Steuereinheit, mit welcher die Motoren (3) ansteuerbar sind, und
- mit einem System, mit welchem der Fahrzeugführer die Fahrtrichtung des Fahrzeugs unabhängig von der Vorausrichtung des Fahrzeugs wählen kann, wobei das System zum Austausch von Informationen mit der Steuereinheit verbunden ist,
**dadurch gekennzeichnet,**
**dass** das Fahrzeug ein Steuermittel aufweist, mit welchem die Vorausrichtung des Fahrzeugs einstellbar ist und welches zum Austausch von Informationen mit der Steuereinheit verbunden ist,
**dass** das Fahrzeug ein Haltemittel (2) aufweist, welches von der Basis (1) aufragt und an welcher sich ein Fahrzeugführer festhalten kann, und
**dass** das Steuermittel (5) an dem Haltemittel (2) angebracht ist.

2. Fahrzeug nach Anspruch 1, **dadurch gekennzeichnet, dass** das Steuermittel auf verschiedene Arten betätigbar ist.

3. Fahrzeug nach Anspruch 2, **dadurch gekennzeichnet, dass** die Steuereinheit so eingerichtet ist, dass eine Information des Steuermittels, die einer vom Fahrzeugführer gewählten ersten Betätigungsart entspricht und eine Einstellung der Vorausrichtung vorgibt, zu einer Drehung der Basis (1) mittels wenigstens eines Teils der Motoren (3) führt, bis die Vorausrichtung des Fahrzeugs der Fahrtrichtung des Fahrzeugs entspricht oder die Vorausrichtung und die Fahrtrichtung entgegengesetzt zueinander sind, auch wenn die Betätigung gemäß der ersten Betätigungsart nicht andauert.

4. Fahrzeug nach Anspruch 2 oder 3, **dadurch gekennzeichnet, dass** die Steuereinheit so eingerichtet ist, dass eine Information des Steuermittels, die einer vom Fahrzeugführer gewählten zweiten Betätigungsart entspricht und eine Einstellung der Vorausrichtung vorgibt, zu einer Drehung der Basis (1) mittels wenigstens eines Teils der Motoren (3) führt, solange die Betätigung gemäß der zweiten Betätigungsart andauert.

5. Fahrzeug nach einem der Ansprüche 1 bis 4, **dadurch gekennzeichnet, dass** der Fahrzeugführer mit dem Steuermittel neben der Vorausrichtung auch die Fahrtrichtung und/oder die Geschwindigkeit des Fahrzeugs wählen kann.

6. Fahrzeug nach einem der Ansprüche 1 bis 5, **dadurch gekennzeichnet, dass** das Steuermittel ein Bedienelement, zum Beispiel einen Steuerknüppel (5), einen Joystick, eine Schaltwippe oder einen Drehschalter, aufweist.

7. Fahrzeug nach einem der Ansprüche 1 bis 6, **dadurch gekennzeichnet, dass** die Steuereinheit so eingerichtet ist, dass eine Drehung der Basis (1) zum Eindrehen der Vorausrichtung in die Fahrtrichtung oder entgegen der Fahrtrichtung erfolgt, wenn die vom Fahrzeugführer gewählte Einstellung der Fahrtrichtung für eine bestimmte Zeit andauert.

8. Fahrzeug nach einem der Ansprüche 2 bis 7, **dadurch gekennzeichnet, dass** die Steuereinheit so eingerichtet ist, dass die Drehung der Basis (1) zum Eindrehen der Vorausrichtung in die Fahrtrichtung oder entgegen der Fahrtrichtung erfolgt, wenn die Fahrtrichtung und die Vorausrichtung einen Winkel einschließen, der in einem bestimmten Winkelintervall liegt.

9. Verfahren zum Steuern eines Fahrzeugs nach einem der Ansprüche 1 bis 8, **gekennzeichnet durch** ein Wählen der Fahrtrichtung **durch** den Fahrzeugführer mit dem an dem Haltemittel (2) angebrachten Steuermittel (5) und ein anschließendes Drehen der Basis (1) in die Fahrtrichtung, bis die Fahrtrichtung und die Vorausrichtung übereinstimmen oder zueinander entgegengerichtet sind.

10. Verfahren nach Anspruch 9, **dadurch gekennzeichnet, dass** das Drehen der Basis (1) nur dann erfolgt, wenn die Fahrtrichtung und die Vorausrichtung einen Winkel einschließen, der in einem bestimmten Winkelintervall liegt.

11. Verfahren nach Anspruch 9 oder 10, **dadurch gekennzeichnet, dass** das Drehen der Basis (1) dann erfolgt, wenn die vom Fahrzeugführer gewählte Einstellung der Fahrtrichtung für eine bestimmte Zeit angedauert hat.

12. Verfahren nach Anspruch 9, 10 oder 11, **dadurch gekennzeichnet, dass** das Drehen der Basis (1) dann erfolgt, wenn der Fahrzeugführer das Steuermittel in der ersten Betätigungsart betätigt, wobei die Basis (1) mittels der Motoren solange gedreht wird, bis die Vorausrichtung und Fahrtrichtung übereinstimmen oder zueinander entgegengerichtet sind, auch wenn die Betätigung in der ersten Betätigungsart nicht bis zum Ende der Drehung der Basis andauert.

13. Verfahren nach einem der Ansprüche 9 bis 12, **dadurch gekennzeichnet, dass** das Drehen der Basis (1) dann erfolgt, wenn der Fahrzeugführer das Steuermittel in der zweiten Betätigungsart betätigt, wobei die Basis (1) mittels der Motoren solange gedreht wird, wie die Betätigung in der zweiten Betätigungsart andauert.

## Claims

1. Vehicle
- with a ball (4) which can roll in any direction on a base,
- with at least three motors (3), the drive axles of which are aligned in different directions,
- with at least one basis (1) on which a vehicle operator can position himself and on which the motors (3) are fastened, wherein at the basis (1) an advance orientation of the vehicle is fixed,
- with a control unit with which the motors (3) can be controlled, and
- with a system, with which the vehicle operator can select the drive direction of the vehicle independently of the advance orientation of the vehicle, wherein the system is connected with the control unit for the exchange of information,
**characterised in**
**that** the vehicle has a controlling means with which the advance orientation of the vehicle can be adjusted and which is connected with the control unit for the exchange of information,
**that** the vehicle has a holding means (2) which protrudes from the basis (1) and which a vehicle operator can hold onto, and
**that** the control means (5) is mounted on the holding means (2).

2. Vehicle according to claim 1, **characterised in that** the control means can be actuated in different modes.

3. Vehicle according to claim 2, **characterised in that** the control unit is configured such that an information of the control means, which corresponds to a first actuating mode selected by the vehicle operator and specifies a setting of the advance orientation, results in a rotation of the basis (1) by means of at least one part of the motors (3), until the advance orientation of the vehicle corresponds to the drive direction of the vehicle or the advance orientation and the drive direction are contrary to one another, also if the actuation according to the first actuating mode is not sustained.

4. Vehicle according to claim 2 or 3, **characterised in that** the control unit is configured such that an information of the control means which corresponds to a second actuating mode selected by the vehicle operator and specifies a setting of the advance orientation, results in a rotation of the basis (1) by means of at least one part of the motors (3) as long as the actuation according to the second actuating mode is sustained.

5. Vehicle according to any of claims 1 to 4, **characterised in that** the vehicle operator is able to select with the control means in addition to the advance orientation also the drive direction and/or the speed of the vehicle.

6. Vehicle according to any of claims 1 to 5, **characterised in that** the controlling means is an operating element, for example a control column (5), a joystick, a rocker switch or a rotary switch.

7. Vehicle according to any of claims 1 to 6, **characterised in that** the control unit is configured such that a rotation of the basis (1) for turning the advance orientation into the drive direction or contrary to the drive direction occurs when the setting, selected by the vehicle operator, of the drive direction is sustained for a certain time.

8. Vehicle according to any of claims 2 to 7, **characterised in that** the control unit is configured such that the rotation of the basis (1) for turning the advance orientation into the drive direction or contrary to the drive direction occurs when the drive direction and the advance orientation enclose an angle which lies at a specific angle interval.

9. Method for controlling the vehicle according to any of claims 1 to 8, **characterised by** a selection of the drive direction on the part of the vehicle operator with the controlling means (5) mounted on the holding means (2) and a subsequent rotation of the basis (1) into the drive direction, until the drive direction and the advance orientation correspond or are contrary to one another.

10. Method according to claim 9, **characterised in that** the rotation of the basis (1) takes place only when the drive direction and the advance orientation enclose an angle which lies in a specific angle interval.

11. Method according to claim 9 or 10, **characterised in that** the rotation of the basis (1) takes place when the setting, selected by the vehicle operator, of the drive direction has been sustained for a specific time.

12. Method according to claim 9, 10 or 11, **characterised in that** the rotation of the basis (1) takes place when the vehicle operator actuates the control means in the first actuating mode, wherein the basis (1) is rotated by means of the motors until the advance orientation and drive direction correspond or are contrary to one another, even when the actuation in the first actuating mode is not sustained until the end of the rotation of the basis.

13. Method according to any of claims 9 to 12, **characterised in that** the rotation of the basis (1) takes place when the vehicle operator actuates the control means in the second actuating mode, wherein the basis (1) is rotated by means of the motors as long as the actuation in the second actuating mode is sustained.

## Revendications

1. Véhicule
- avec une sphère (4) roulant au sol dans n'importe quelle direction,
- avec au moins trois moteurs (3) dont les axes de sortie sont alignés dans des directions différentes,
- avec au moins une base (1) sur laquelle un conducteur du véhicule peut se placer et à laquelle les moteurs (3) sont fixés, un préalignement du véhicule étant fixé à la base (1),
- avec une unité de commande permettant de contrôler les moteurs (3), et
- avec un système permettant au conducteur du véhicule de sélectionner le sens de la marche du véhicule indépendamment du préalignement du véhicule, le système étant connecté à l'unité de commande pour l'échange d'informations,
**caractérisé en ce que**
le véhicule présente un moyen de commande permettant de régler le préalignement du véhicule et qui est relié à l'unité de commande pour l'échange d'informations,
**en ce que** le véhicule présente un moyen de maintenir (2) qui dépasse de la base (1) et que le conducteur du véhicule peut agripper, et
que le moyen de commande (5) est attaché au moyen de maintenir (2).

2. Véhicule selon la revendication 1, **caractérisé en ce que** le moyen de commande est utilisable dans différents modes.

3. Véhicule selon la revendication 2, **caractérisé en ce que** l'unité de commande est configurée de sorte qu'une information du moyen de commande, qui correspond à un premier mode d'actionnement sélectionné par le conducteur du véhicule et prédéfinit un réglage du préalignement, entraîne une rotation de la base (1) au moyen d'au moins une partie des moteurs (3), jusqu'à ce que le préalignement du véhicule corresponde au sens de la marche du véhicule ou que le préalignement et le sens de la marche soient opposés l'un à l'autre, même si l'actionnement selon le premier mode d'actionnement ne se poursuit pas.

4. Véhicule selon la revendication 2 ou 3, **caractérisé en ce que** l'unité de commande est configurée de sorte qu'une information du moyen de commande, qui correspond à un second mode d'actionnement sélectionné par le conducteur du véhicule et prédéfinit un réglage du préalignement, entraîne une rotation de la base (1) au moyen d'au moins une partie des moteurs (3), tant que l'actionnement selon le second mode d'actionnement se poursuit.

5. Véhicule selon l'une quelconque des revendications 1 à 4, **caractérisé en ce que** le moyen de commande permet au conducteur du véhicule de sélectionner non seulement le préalignement, mais aussi le sens de la marche et/ou la vitesse du véhicule.

6. Véhicule selon l'une quelconque des revendications 1 à 5, **caractérisé en ce que** le moyen de commande présente un élément de commande, par exemple un levier de commande (5), un joystick, une bascule de commutation ou un commutateur rotatif.

7. Véhicule selon l'une quelconque des revendications 1 à 6, **caractérisé en ce que** l'unité de commande est configurée pour effectuer une rotation de la base (1) pour tourner le préalignement dans le sens de la marche ou contre le sens de la marche lorsque le réglage du sens de la marche sélectionné par le conducteur du véhicule se poursuit pendant un certain temps.

8. Véhicule selon l'une quelconque des revendications 2 à 7, **caractérisé en ce que** l'unité de commande est configurée de sorte que la rotation de la base (1) pour tourner le préalignement dans le sens de la marche ou contre le sens de la marche se produit lorsque le sens de la marche et le préalignement comprennent un angle qui se situe dans un certain intervalle angulaire.

9. Procédé de commande d'un véhicule selon l'une quelconque des revendications 1 à 8, **caractérisé par** la sélection du sens de la marche par le conducteur du véhicule avec le moyen de commande (5) attaché au moyen de maintenir (2), puis la rotation de la base (1) dans le sens de la marche jusqu'à ce que le sens de la marche et le préalignement coïncident ou soient opposés l'un à l'autre.

10. Procédé selon la revendication 9, **caractérisé en ce que** la rotation de la base (1) n'est effectuée que lorsque le sens de la marche et le préalignement comprennent un angle qui se situe dans un certain intervalle angulaire.

11. Procédé selon la revendication 9 ou 10, **caractérisé en ce que** la rotation de la base (1) est effectuée lorsque le réglage du sens de la marche sélectionné par le conducteur du véhicule s'est poursuivi pendant un certain temps.

12. Procédé selon la revendication 9, 10 ou 11, **caractérisé en ce que** la rotation de la base (1) est effectuée lorsque le conducteur du véhicule actionne le moyen de commande dans le premier mode d'actionnement, dans lequel la base (1) est tournée au moyen des moteurs jusqu'à ce que le préalignement et le sens de la marche coïncident ou soient opposés l'un à l'autre, même si l'actionnement dans le premier mode d'actionnement ne se poursuit pas jusqu'à la fin de la rotation de la base.

13. Procédé selon l'une quelconque des revendications 9 à 12, **caractérisé en ce que** la rotation de la base (1) est effectuée lorsque le conducteur du véhicule actionne le moyen de commande dans le second mode d'actionnement, dans lequel la base (1) est tournée au moyen des moteurs tant que l'actionnement dans le second mode d'actionnement se poursuit.
